# EUROPÄISCHE PATENTSCHRIFT

(11) **EP 4 504 678 B1**
(45) Veröffentlichungstag und Bekanntmachung des Hinweises auf die Patenterteilung: **03.12.2025**
(21) Anmeldenummer: 22720657.0
(22) Anmeldetag: 04.04.2022
(51) Int. Cl.: C04B 28/06, C04B 38/10

(54) **MINERALISCHER MONTAGESCHAUM**
MINERAL-BASED EXPANDING FOAM
MOUSSE EXPANSIBLE À BASE DE MINÉRAUX

(43) Veröffentlichungstag der Anmeldung: 12.02.2025
(73) Patentinhaber: Wacker Chemie AG, 81671 München (DE)
(72) Erfinder: BIENERTH, Holger, 81825 München (DE); BONIN, Klaus, 84489 Burghausen (DE); BRUMMER, Josef, 84359 Simbach (DE); EDER, Klaus-Jürgen, 84335 Mitterskirchen (DE); ZEH, Harald, 84489 Burghausen (DE)
(74) Vertreter: Ege, Markus
(86) Internationale Anmeldenummer: PCT/EP2022/058907
(87) Internationale Veröffentlichungsnummer: WO 2023/193882

(56) Entgegenhaltungen:
- EP-A1- 1 529 789
- WO-A1-2017/093398
- WO-A1-2021/180309
- CA-A1- 2 242 672
- CN-A- 109 020 371
- CN-A- 110 590 279
- DE-A1- 4 009 967
- DE-C1- 4 209 897

## Beschreibung

Die Erfindung betrifft mineralischen Montageschaum, Verfahren zur Herstellung von mineralischem Montageschaum sowie dessen Verwendung zum Verfüllen von Hohlräumen beispielsweise beim Einbauen von Fenstern oder Türen.

Gegenwärtig werden üblicherweise Polyurethanschäume zum Verfüllen von Hohlräumen beim Einbau von Fenstern oder Türen verwendet. Polyurethane sind jedoch mit einer ganzen Reihe von Nachteilen verbunden. Beispielsweise sind Polyurethane nicht UVbeständig, neigen zur Vergilbung und sind insbesondere nicht brandbeständig. Beim Verfüllen von Hohlräumen wird meist ein Überschuss an Polyurethanschaum appliziert, der dann beispielsweise am Mauerwerk oder an den Fenstern oder Türen anhaftet und sich in der Regel nicht mehr rückstandsfrei entfernen lässt. Beim Applizieren von Polyurethanschaum übrig gebliebene Reste oder mit Polyurethanschaum kontaminierter Bauschutt ist als Sondermüll zu entsorgen. Die Applikation von Polyurethanschaum erfolgt üblicherweise mittels Kartuschen, welche nach ihrer Verwendung nicht gereinigt werden können und damit nicht wiederverwertbar sind und aufwändig entsorgt werden müssen. Darüber hinaus besteht Bedarf an einer kostengünstigeren Alternative zu Polyurethanen.

Vor diesem Hintergrund bestand die Aufgabe, ein Material zum Verfüllen von Hohlräumen bereitzustellen, mit dem ein oder mehrere der oben genannten Probleme gelöst werden können. Insbesondere sollte sich dieses Material mittels Kartuschen applizieren lassen.

Überraschenderweise wurde die Aufgabe mit mineralischem Montageschaum gelöst, der Schutzkolloid stabilisierte Polymere, Schaumstabilisatoren sowie bestimmte Luftporenbildner und zusätzlich latente Luftporenbildner sowie Zement enthielt. Besonders überraschend war hierbei, dass sich der mineralische Montageschaum auch als einkomponentige Mischung (1K-System) in Kartuschen zum Verfüllen von Hohlräumen applizieren ließ.

Zementäre Schaummörtel mit Luftporenbildnern und Schaumstabilisatoren sind beispielsweise aus der WO2021/180309 oder WO2019038105 bekannt. In der WO/EP2021/ 062371 (Anmeldenummer) und DE102014101519 werden entsprechende Schaummörtel als Fliesenkleber beziehungsweise als Spachtelmasse eingesetzt. Die CN108484211 und CN108529940 empfehlen Schaummörtel als Dämmmaterial. Die DE4209897 und DE3909083 beschreiben Gips-basierten Schaummörtel. Die GB2007636 befasst sich mit Silicatschäumen. Die DE2056255 offenbart Schaummittel für Gips- und Zementmassen. Die DE4009967 lehrt Mörtel mit Porenbildnern, die mit einer inaktivierenden Beschichtung versehen sind. Die US2012-286190 beschreibt Wärmedämmmaterial basierend auf schnellabbindendem Zement und geringen Anteilen an Portlandzement sowie Füllstoffen und gegebenenfalls Additiven wie Schaumbildnern.

Ein Gegenstand der Erfindung ist mineralischer Montageschaum basierend auf einem oder mehreren Schaumstabilisatoren,
einem oder mehreren Luftporenbildnern ausgewählt aus der Gruppe umfassend Ammonium- oder Alkalisalze der Hydrogencarbonate oder Carbonate,
gegebenenfalls einem oder mehreren Füllstoffen und gegebenenfalls einem oder mehreren Additiven, dadurch gekennzeichnet, dass der mineralische Montageschaum zusätzlich auf einem oder mehreren Schutzkolloid stabilisierten Polymeren von ethylenisch ungesättigten Monomeren in Form von wässrigen Dispersionen oder in Wasser redispergierbaren Pulvern,
einem oder mehreren latenten Luftporenbildnern ausgewählt aus der Gruppe umfassend Aluminium und Silicium sowie deren Legierungen und Calciumcarbide und
30 bis 95 Gew.-%, bezogen auf das Trockengewicht des mineralischen Montageschaums, Zement basiert,
mit der Maßgabe, dass der Anteil an latenten Luftporenbildnern ≥ 10 Gew.-% ist, bezogen auf das Gesamtgewicht aus Luftporenbildnern und latenten Luftporenbildnern.

Ein weiterer Gegenstand der Erfindung sind Verfahren zur Herstellung von mineralischem Montageschaum,
indem eine Trockenmischung hergestellt wird durch Mischen von einem oder mehreren Schaumstabilisatoren,
einem oder mehreren Luftporenbildnern ausgewählt aus der Gruppe umfassend Ammonium- oder Alkalisalze der Hydrogencarbonate oder Carbonate,
gegebenenfalls einem oder mehreren Füllstoffen und gegebenenfalls einem oder mehreren Additiven und
die so erhaltene Trockenmischung mit Wasser angemacht wird, dadurch gekennzeichnet, dass in die Trockenmischung zusätzlich ein oder mehrere Schutzkolloid stabilisierte Polymere von ethylenisch ungesättigten Monomeren in Form von in Wasser redispergierbaren Pulvern,
ein oder mehrere latente Luftporenbildner ausgewählt aus der Gruppe umfassend Aluminium und Silicium sowie deren Legierungen und Calciumcarbide und
30 bis 95 Gew.-%, bezogen auf das Trockengewicht des mineralischen Montageschaums, Zement eingebracht werden,
mit der Maßgabe, dass die Trockenmischung zu ≥ 10 Gew.-% auf latenten Luftporenbildnern, bezogen auf das Gesamtgewicht aus Luftporenbildnern und latenten Luftporenbildnern, basiert.

Ein weiterer Gegenstand der Erfindung ist die Verwendung des erfindungsgemäßen mineralischen Montageschaums zum Verfüllen von Hohlräumen beispielsweise beim Einbauen von Fenstern oder Türen.

Mineralischer Montageschaum ist allgemein ein Mörtel, der implizit in vermehrtem Umfang Luftporen enthält. Die Luftporen des mineralischen Montageschaums können beispielsweise mittels Luftporenbildnern und gegebenenfalls durch Eintragen von Luft eingebracht sein.

Die im Folgenden getroffenen Angaben in Gew.-%, bezogen auf das Trockengewicht des mineralischen Montageschaums, beziehen sich allgemein auf das Trockengewicht der Komponenten zur Herstellung des mineralischen Montageschaums.

Beispiele für Luftporenbildner sind Ammonium- oder Alkalisalze der Hydrogencarbonate oder Carbonate, insbesondere deren Ammonium- oder Natrium- oder Kaliumsalze. Besonders bevorzugt sind Hydrogencarbonate. Am meisten bevorzugt ist Natriumhydrogencarbonat. Vorzugsweise umfassen die Luftporenbildner kein Erdalkalicarbonat.

Luftporenbildner haben eine Körnung von vorzugsweise 10 µm bis 1 mm, besonders bevorzugt von 100 µm bis 800 µm und am meisten bevorzugt 200 µm bis 700 µm.

Die Luftporenbildner sind generell von den latenten Luftporenbildnern verschieden; das heißt, die Luftporenbildner werden neben den latenten Luftporenbildnern als weitere oder zusätzliche Luftporenbildner eingesetzt; oder, anders ausgedrückt, der mineralische Montageschaum enthält allgemein ein oder mehrere Luftporenbildner i) und ein oder mehrere latente Luftporenbildner ii). Luftporenbildner i) umfassen allgemein keine latenten Luftporenbildner ii).

Der mineralische Montageschaum basiert zu vorzugsweise 0,01 bis 10 Gew.-%, mehr bevorzugt 0,05 bis 5 Gew.-%, noch mehr bevorzugt 0,08 bis 3 Gew.-%, besonders bevorzugt 0,1 bis 1 Gew.-% und am meisten bevorzugt 0,2 bis 0,8 Gew.-% auf Luftporenbildnern, bezogen auf das Trockengewicht des mineralischen Montageschaums.

Der mineralische Montageschaum basiert zu vorzugsweise 0,01 bis 15 Gew.-%, besonders bevorzugt 0,1 bis 5 Gew.-% und am meisten bevorzugt 0,2 bis 1 Gew.-% auf Luftporenbildnern, bezogen auf das Trockengewicht des im mineralischen Montageschaum enthaltenen Zement.

Das Eintragen von Luft zur Herstellung von mineralischem Montageschaum kann gegebenenfalls zusätzlich durch mechanisches Mischen wässriger Mörtel mit Luft erfolgen. Hierzu können die wässrigen Mörtel beispielsweise aufgeschlagen und Luft untergemischt werden. Das mechanische Mischen erfolgt vorzugsweise mittels Rührblättern, Mischwendeln, Paddel-, Propeller- oder Lochblech-Rührern. Besonders bevorzugt sind Mischwendel mit Lochblech. Es können auch Schaumgeneratoren Einsatz finden. Schaumgeneratoren sind kommerziell verfügbare Maschinen zum Generieren von Schaum. Es kann auch Luft in die wässrigen Mörtel eingeblasen werden. Die Luft hat vorzugsweise eine Temperatur von 5°C bis 35°C, insbesondere Umgebungstemperatur.

Beispiele für latente Luftporenbildner sind Aluminium und Silicium sowie deren Legierungen oder Calciumcarbide. Aluminium, Silicium und deren Legierungen liegen hierbei allgemein in metallischer Form vor. Als Legierungen geeignet sind beispielsweise Legierungen von Aluminium oder Silicium mit Metallen, wie Eisen. Bevorzugt ist Aluminium. Die latenten Luftporenbildner können gegebenenfalls beschichtet sein, beispielsweise mit Fetten, Ölen, Harzen oder Wachsen, wie Lanolin, insbesondere Wollwachs, oder trocknenden Ölen, wie Leinöl, Silikonölen oder Silikonharzen. Mit solchen Beschichtungen kann die Freisetzung von Luftporen im mineralischen Montageschaum zusätzlich zeitlich gezielt verzögert werden, beispielsweise über die Art oder Dicke der Beschichtung. Die latenten Luftporenbildner liegen vorzugsweise in Form von Pulvern oder Partikeln vor. Entsprechende latente Luftporenbildner sind kommerziell verfügbar, beispielsweise unter dem Handelsname Expandal 9-6355 der Firma Benda-Lutz.

Der mineralische Montageschaum basiert zu 0,01 bis 10 Gew.-%, besonders bevorzugt 0,1 bis 5 Gew.-%, noch mehr bevorzugt 0,5 bis 4 Gew.-% und am meisten bevorzugt 1 bis 3 Gew.-% auf latenten Luftporenbildnern, bezogen auf das Trockengewicht des mineralischen Montageschaums.

Der mineralische Montageschaum basiert zu vorzugsweise 0,01 bis 15 Gew.-%, besonders bevorzugt 0,5 bis 10 Gew.-% und am meisten bevorzugt 1 bis 5 Gew.-% auf latenten Luftporenbildnern, bezogen auf das Trockengewicht des im mineralischen Montageschaum enthaltenen Zement.

Der mineralische Montageschaum basiert allgemein zu ≥ 10 Gew.-%, bevorzugt 10 bis 95 Gew.-%, besonders bevorzugt 50 bis 90 Gew.-% und am meisten bevorzugt 75 bis 85 Gew.-% auf latenten Luftporenbildnern, bezogen auf das Gesamtgewicht aus latenten Luftporenbildnern und den weiteren Luftporenbildnern.

Der mineralische Montageschaum basiert zu vorzugsweise 0,01 bis 15 Gew.-%, besonders bevorzugt 0,5 bis 10 Gew.-% und am meisten bevorzugt 1 bis 5 Gew.-% auf latenten Luftporenbildnern und den weiteren Luftporenbildnern, bezogen auf das Trockengewicht des im mineralischen Montageschaum enthaltenen Zement. Der mineralische Montageschaum basiert zu vorzugsweise 0,02 bis 15 Gew.-%, besonders bevorzugt 0,5 bis 10 Gew.-% und am meisten bevorzugt 1 bis 5 Gew.-% auf latenten Luftporenbildnern und den weiteren Luftporenbildnern, bezogen auf das Trockengewicht des mineralischen Montageschaums. Die weiteren Luftporenbildner sind hierbei allgemein die oben genannten, von den latenten Luftporenbildnern verschiedenen Luftporenbildner.

Es können beispielsweise Tensid-, Polymer-, Protein- oder Enzym-basierte Schaumstabilisatoren Einsatz finden.

Beispiele für Tenside als Schaumstabilisatoren sind Olefinsulfonsäuren; Fettsäuren, mit vorzugsweise 16 bis 18 C-Atomen, oder deren Salze; Fettalkohole, mit vorzugsweise 10 bis 18 C-Atomen; Alkylphenole oder Hydroxyalkylphenole mit vorzugsweise Alkylketten mit 10 bis 18 C-Atomen; Alkyl- und Alkylarylethersulfate mit vorzugsweise 8 bis 18 C-Atomen im hydrophoben Rest und vorzugsweise 1 bis 50 Ethylenoxideinheiten; Sulfonate, insbesondere Alkylsulfonate mit vorzugsweise 8 bis 18 C-Atomen, Alkylarylsulfonate, vorzugsweise mit Alkylresten mit 8 bis 18 C-Atomen, Ester oder Halbester der Sulfobernsteinsäure mit vorzugsweise einwertigen Alkoholen oder Alkylphenolen mit vorzugsweise 4 bis 15 C-Atomen im Alkylrest, wobei diese Alkohole oder Alkylphenole auch mit 1 bis 40 Ethylenoxideinheiten ethoxyliert sein können; Phosphorsäureteilester, insbesondere Alkyl- oder Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten; Alkylpolyglykolether bevorzugt mit 8 bis 40 EO-Einheiten und Alkylresten mit 8 bis 20 C-Atomen; Alkylarylpolyglykolether bevorzugt mit 8 bis 40 EO-Einheiten und 8 bis 20 C-Atomen in den Alkyl-und Arylresten; Ethylenoxid/Propylenoxid (EO/ PO)-Blockcopolymere bevorzugt mit 8 bis 40 EO- bzw. PO-Einheiten; N-Methyltauride vorzugsweise von höheren Fettsäuren, mit vorzugsweise 10 bis 18 C-Atomen; Fettsäurealkylolamide, wie Mono- oder Diaethanolamide von Fettsäuren; Aminoxide oder Phosphinoxide, wie Cocosdimethylaminoxid oder Cocosdimethylphosphinoxid der allgemeinen Formel R-N(CH₃)₂=0 oder R-P(CH₃)₂=0; Ampholyte, wie Cocosfettsäure-Dimethylamino-Essigsaures Natrium oder Sulfobetain; Phosphorsäureester insbesondere von langkettigen Alkoholen, mit vorzugsweise 10 bis 18 C-Atomen oder von mit 1 bis 4 Mol Ethylenoxid oxyethylierten Alkoholen mit 8 bis 10 C-Atomen im Molekül.

Bevorzugte Tenside sind hierbei Olefinsulfonsäuren, Fettsäuren, Fettalkohole, Alkyl- und Alkylarylethersulfate und Sulfonate.

Eine EO-Einheit steht für eine Ethylenoxideinheit und eine PO-Einheit für eine Propylenoxideinheit. Die vorgenannten Säuren können auch in Form ihrer Salze vorliegen, insbesondere Ammonium- oder (Erd)Alkalisalze. Olefinsulfonsäuren enthalten vorzugsweise 10 bis 20 Kohlenstoffatome. Die Olefinsulfonsäuren tragen vorzugsweise ein oder zwei Sulfonsäure- oder Hydroxyalkylsulfonäure-Gruppen. Hierbei sind α-Olefinsulfonsäuren bevorzugt.

Beispiele für Polymere als Schaumstabilisatoren sind Polyvinylalkohole; Polyvinylacetale; Polyvinylpyrrolidone; Polysaccharide in wasserlöslicher Form, wie Stärken (Amylose und Amylopectin), Cellulosen und deren Derivate, wie Carboxymethyl-, Methyl-, Hydroxyethyl-, Hydroxypropyl-Derivate, Dextrine und Cyclodextrine; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere und Vinylethermaleinsäure-Copolymere.

Beispiele für Proteine als Schaumstabilisatoren sind Kasein, Kaseinat, Sojaprotein oder Gelatine. Proteine sind beispielsweise erhältlich durch Proteinhydrolyse, insbesondere tierischer Proteine, beispielsweise aus Horn, Blut, Knochen und ähnlichen Abfällen von Rindern, Schweinen und sonstigen Tierkadavern. Enzyme als Schaumstabilisatoren können beispielsweise biotechnologischen Ursprungs sein.

Bevorzugte Schaumstabilisatoren sind Tenside; Polyvinylalkohole; Polyvinylpyrrolidone; Cellulosen und deren Derivate, wie Carboxymethyl-, Methyl-, Hydroxyethyl-, Hydroxypropyl-Derivate; Proteine wie Kasein oder Kaseinat, Sojaprotein und Gelatine. Besonders bevorzugte Schaumstabilisatoren sind Tenside, insbesondere Olefinsulfonsäuren.

Besonders bevorzugt ist der gemeinsame Einsatz von Tensid-Schaumstabilisatoren und Polymer-Schaumstabilisatoren.

Die Schaumstabilisatoren haben Molekulargewichte von vorzugsweise ≤ 4000 g/mol, mehr bevorzugt ≤ 3000 g/mol, noch mehr bevorzugt ≤ 2500 g/mol, besonders bevorzugt ≤ 1500 g/mol und am meisten bevorzugt ≤ 1000 g/mol.

Die Schaumstabilisatoren und die Schutzkolloid stabilisierten Polymere liegen im Allgemeinen nebeneinander vor. Die Schaumstabilisatoren sind allgemein nicht Bestandteil der Schutzkolloid stabilisierten Polymere.

Der mineralische Montageschaum basiert zu vorzugsweise 0,01 bis 35 Gew.-%, besonders bevorzugt 0,05 bis 20 Gew.-% und am meisten bevorzugt 0,1 bis 10 Gew.-% auf Schaumstabilisatoren. Tenside oder Polymere als Schaumstabilisatoren sind zu vorzugsweise 0,01 bis 10 Gew.-%, besonders bevorzugt 0,05 bis 5 Gew.-% und am meisten bevorzugt 0,1 bis 3 Gew.-% enthalten. Proteine oder Enzyme als Schaumstabilisatoren sind zu vorzugsweise 10 bis 35 Gew.-%, besonders bevorzugt 15 bis 30 Gew.-% und am meisten bevorzugt 20 bis 25 Gew.-% enthalten. Die Angaben in Gew.-% beziehen sich hierbei auf das Trockengewicht des mineralischen Montageschaums.

Der mineralische Montageschaum basiert zu vorzugsweise 0,5 bis 40 Gew.-%, besonders bevorzugt 2 bis 25 Gew.-% und am meisten bevorzugt 5 bis 15 Gew.-% auf Schutzkolloid stabilisierten Polymeren von ethylenisch ungesättigten Monomeren, bezogen auf das Trockengewicht des mineralischen Montageschaums.

Die Polymere von ethylenisch ungesättigten Monomeren basieren beispielsweise auf einem oder mehreren Monomeren ausgewählt aus der Gruppe umfassend Vinylester, (Meth)acrylsäureester, Vinylaromaten, Olefine, 1,3-Diene und Vinylhalogenide.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Resolution). Besonders bevorzugt ist Vinylacetat.

Geeignete Monomere aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen und Propylen, und die bevorzugten Diene sind 1,3-Butadien und Isopren.

Gegebenenfalls können noch 0 bis 10 Gew.-%, vorzugsweise 0,1 bis 5 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Ac-rylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxyp-ropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure-und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass eine Glasübergangstemperatur Tg von -25°C bis +35°C, vorzugsweise -10°C bis +25°C, besonders bevorzugt -10°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, Seite 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt allgemein in wässrigem Medium und bevorzugt nach dem Emulsions- oder Suspensionspolymerisationsverfahren - wie beispielsweise in DE-A 102008043988 beschrieben. Bei der Polymerisation können die gängigen Schutzkolloide und/oder Emulgatoren eingesetzt werden, wie in der DE-A 102008043988 beschrieben. Die Polymerisate in Form von wässrigen Dispersionen können wie in der DE-A 102008043988 beschrieben in entsprechende in Wasser redispergierbare Pulver überführt werden. Dabei wird in der Regel eine Trocknungshilfe eingesetzt, vorzugsweise die vorgenannten Polyvinylalkohole.

Die Polymere können beispielsweise in Form von wässrigen Dispersionen, insbesondere Schutzkolloid stabilisierten wässrigen Dispersionen vorliegen. Bevorzugte Schutzkolloide sind Polyvinylalkohole, wie teilverseifte oder vollverseifte Polyvinylalkohole, insbesondere mit einem Hydrolysegrad von 80 bis 100 Mol-%. Besonders bevorzugt sind teilverseifte Polyvinylalkohole mit einem Hydrolysegrad von 80 bis 94 Mol-% und einer Höpplerviskosität, in 4 %-iger wässriger Lösung von insbesondere 1 bis 30 mPas (Methode nach Höppler bei 20°C, DIN 53015). Die genannten Schutzkolloide sind mittels dem Fachmann bekannter Verfahren zugänglich. Die Schutzkolloide sind im Allgemeinen in einer Menge von insgesamt 1 bis 20 Gew.-%, bezogen auf das Gesamtgewicht Polymere, enthalten.

Die Polymere liegen vorzugsweise in Form von Schutzkolloid stabilisierten, in Wasser redispergierbaren Pulvern vor. Dispergieren der Schutzkolloid stabilisierten, in Wasser redispergierbaren Polymerpulver führt zu Schutzkolloid stabilisierten Polymeren in Form von wässrigen Redispersionen. Die Pulver enthalten vorzugsweise 3 bis 30 Gew.-%, besonders bevorzugt 5 bis 20 Gew.-% Polyvinylalkohole, insbesondere die vorgenannten Polyvinylalkohole, bezogen auf das Trockengewicht der Pulver.

Die Schutzkolloid stabilisierten Polymere liegen im Allgemeinen separat von den Luftporenbildnern, latenten Luftporenbildnern und/oder Schaumstabilisatoren vor. Die Luftporenbildner, latenten Luftporenbildner und/oder Schaumstabilisatoren sind im Allgemeinen nicht mit den Schutzkolloid stabilisierten Polymeren beschichtet. Die Schutzkolloid stabilisierten Polymere beziehungsweise die Schutzkolloide oder die Polymere der Schutzkolloid stabilisierten Polymere sind allgemein von den Schaumstabilisatoren und etwaigen Verdickungsmitteln verschieden.

Bei Zement kann es sich beispielsweise um Portlandzement (CEM I), Portlandhüttenzement (CEM II), Hochofenzement (CEM III), Puzzolanzement (CEM IV), Kompositzement (CEM V), Portlandsilicatstaubzement, Portlandschieferzement, Portlandkalksteinzement, Trasszement, Magnesiazement, Phosphatzement, Mischzemente oder Füllzemente oder schnellabbindenden Zement handeln. Beispiele für schnellabbindenden Zement sind Aluminatzement, Calciumsulfoaluminatzemente und Hochtonerdezement.

Bevorzugt sind Portlandzement CEM I, Portlandhüttenzement CEM II/A-S, CEM II/B-S, Portlandkalksteinzement CEM II/A-LL, Portlandflugaschezement CEM II/A-V, Portlandflugaschehüttenzement CEM II/B-SV oder Hochofenzement CEM III/A, CEM III/B, CEM III/B und Aluminatzement.

Auf Zement basiert der mineralische Montageschaum zu vorzugsweise 40 bis 95 Gew.-%, mehr bevorzugt 50 bis 92 Gew.-%, besonders bevorzugt 60 bis 91 Gew.-% und am meisten bevorzugt 70 bis 90 Gew.-%, bezogen auf das Trockengewicht des mineralischen Montageschaums.

In einer bevorzugten Ausführungsform enthält der mineralische Montageschaum schnellabbindenden Zement, beispielsweise Hochtonerdezement, insbesondere Aluminatzement oder Calciumsulfoaluminatzement, und zudem ein oder mehrere von schnellabbindendem Zement verschiedene Zemente, insbesondere Portlandzemente. Schnellabbindender Zement ist besonders vorteilhaft zur Lösung der erfindungsgemäßen Aufgabe.

Der mineralische Montageschaum basiert zu vorzugsweise 0,5 bis 30 Gew.-%, besonders bevorzugt 1 bis 20 Gew.-% und am meisten bevorzugt 2 bis 10 Gew.-% auf schnellabbindenden Zement, bezogen auf das Trockengewicht des mineralischen Montageschaums. Der mineralische Montageschaum basiert zu vorzugsweise 0,5 bis 40 Gew.-%, besonders bevorzugt 1 bis 25 Gew.-% und am meisten bevorzugt 2 bis 15 Gew.-% auf schnellabbindenden Zement, bezogen auf das Gesamtgewicht des insgesamt eingesetzten Zements.

Der mineralische Montageschaum kann auch ein oder mehrere Verdickungsmittel enthalten, beispielsweise Polysaccharide wie Celluloseether und modifizierte Celluloseether, Celluloseester, Stärkeether, Guar Gum, Xanthan Gum, Polycarbonsäuren wie Polyacrylsäure und deren Teilester, Casein und assoziativ wirkende Verdicker. Bevorzugte Celluloseether sind Methylcelluloseether. Die Verdickungsmittel sind allgemein von den Schaumstabilisatoren verschieden. Die Verdickungsmittel haben Molekulargewichte von vorzugsweise > 4000 g/mol, besonders bevorzugt ≥ 10000 g/mol und am meisten bevorzugt ≥ 20000 g/mol. Der mineralische Montageschaum basiert zu vorzugsweise ≤ 5 Gew.-%, besonders bevorzugt 0,1 bis 3 Gew.-% und am meisten bevorzugt 0,5 bis 1,5 Gew.-% auf Verdickungsmittel, bezogen auf das Trockengewicht des mineralischen Montageschaums.

Zudem kann der mineralische Montageschaum auch Abbindebeschleuniger enthalten, wie Aluminiumverbindungen, Silikate, (Erd)Alkalihydroxide, Nitrate, Nitrite, Sulfate, Borate oder Carbonsäuren. Bevorzugte Abbindebeschleuniger sind Aluminiumsalze, Aluminate, Alkalisilikate, wie Wasserglas, Alkaliformiate, Kaliumhydroxid oder Calciumhydroxid (Ca(OH)₂). Calciumhydroxid wird auch als Kalkhydrat oder Edelkalkhydrat bezeichnet. Die Abbindebeschleuniger liegen generell nicht in Form von Metallen, Legierungen oder Carbiden vor. Die Abbindebeschleuniger sind generell von latenten Luftporenbildnern verschieden.

Der mineralische Montageschaum basiert zu vorzugsweise 0,1 bis 15 Gew.-%, mehr bevorzugt 0,2 bis 10 Gew.-%, besonders bevorzugt 0,3 bis 7 Gew.-% und am meisten bevorzugt 0,5 bis 3 Gew.-% auf Abbindebeschleunigern, bezogen auf das Trockengewicht des mineralischen Montageschaums.

Zusätzlich kann der mineralische Montageschaum Fasern enthalten, wie natürliche, modifizierte natürliche oder synthetische Fasermaterialien, auf Basis von organischen und/oder anorganischen Materialien. Beispiele für natürliche, organische Fasern sind Baumwolle, Hanf, Jute, Flachs, Holzfasern, Cellulose, Viskose, Lederfasern oder Sisal. Beispiele für synthetische, organische Fasern sind Viskosefasern, Polyamidfasern, Polyesterfasern, Polyacrylnitrilfasern, Dralonfasern, Polyethylenfasern, Polypropylenfasern, Polyvinylalkoholfasern oder Aramidfasern. Die anorganischen Fasern können beispielsweise Glasfasern, Kohlenstofffasern, Mineralwollfasern oder Metallfasern sein. Bevorzugt werden Baumwollfasern, Polyacrylnitrilfasern und Cellulosefasern. Die Fasern haben vorzugsweise eine Länge von 1 bis 10 mm, 2 bis 6 mm und am meisten bevorzugt 3 mm bis 4 mm. Die Fasern können in Form von losen Fasern, bündelweise verklebten Fasern, fibrillierten Fasern, multifilamenten Fasern oder Fasern in Dosierverpackung eingesetzt werden. Der mineralische Montageschaum basiert zu vorzugsweise 0,01 bis 3 Gew.-%, besonders bevorzugt 0,05 bis 1 Gew.-% und am meisten bevorzugt 0,1 bis 0,5 Gew.-% auf Fasern, bezogen auf das Trockengewicht der Komponenten zur Herstellung des mineralischen Montageschaums. Mit Fasern kann die mechanische Stabilität des mineralischen Montageschaums gesteigert und die Rissbildungsneigung des mineralischen Montageschaums reduziert werden.

Der mineralische Montageschaum kann auch ein oder mehrere Puzzolane enthalten, wie beispielsweise Kaolin, Mikrosilica, Diatomeenerde, Flugasche, Trassmehl, gemahlene Hochofenschlacke, Glasmehl, gefällte Kieselsäure und pyrogene Kieselsäure. Bevorzugte Puzzolane sind Kaolin, Mikrosilica, Flugasche, gemahlene Hochofenschlacke, insbesondere Metakaolin. Der mineralische Montageschaum basiert zu beispielsweise 0 bis 10 Gew.-%, vorzugsweise 0,5 bis 5 Gew.-% auf Puzzolanen, bezogen auf das Trockengewicht des mineralischen Montageschaums. Am meisten bevorzugt enthält der mineralische Montageschaum keine Puzzolane.

Vorzugsweise basiert der mineralische Montageschaum zu 0,1 bis 20 Gew.-%, mehr bevorzugt 0,5 bis 15 Gew.-% und besonders bevorzugt 1 bis 10 Gew.-% auf Gips, bezogen auf das Trockengewicht der Komponenten zur Herstellung des mineralischen Montageschaums. Beispielhafte Ausführungsformen von Gips sind α-oder β-Halbhydrat (CaSO₄·1/2 H₂O), Dihydrat, Anhydrit oder das bei der Rauchgasentschwefelung anfallende Calciumsulfat (REA-Gips). Insbesondere durch den Zusatz von Gips kann beispielsweise ein etwaiger Schrumpf im Zuge des Abbindens des mineralischen Montageschaums kompensiert werden.

Alternativ kann auf Gips verzichtet werden. Damit kann beispielsweise die Wasserbeständigkeit des abgebundenen mineralischen Montageschaums verbessert werden.

Der mineralische Montageschaum kann auch ein oder mehrere Füllstoffe enthalten. Beispiele für Füllstoffe sind Quarzsand, Quarzmehl, Sand, Kalksteinmehl, Dolomit, Ton, Kreide, Hüttensandmehl, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid. Bevorzugte Füllstoffe sind Quarzsand, Quarzmehl, Kalksteinmehl, Calciumcarbonat, Calciummagnesiumcarbonat (Dolomit), Kreide oder Weißkalkhydrat. Die Füllstoffe liegen generell nicht in Form von Metallen, Legierungen oder Carbiden vor. Die Füllstoffe sind generell von latenten Luftporenbildnern verschieden. Füllstoffe haben eine Körnung von vorzugsweise ≤ 2 mm, besonders bevorzugt ≤ 1 mm.

Der mineralische Montageschaum basiert zu vorzugsweise ≤ 10 Gew.-%, besonders bevorzugt ≤ 5 Gew.-% auf Füllstoffen, bezogen auf das Trockengewicht des mineralischen Montageschaums. Am meisten bevorzugt enthält der mineralische Montageschaum keine Füllstoffe.

Der mineralische Montageschaum kann auch Leichtfüllstoffe enthalten. Als Leichtfüllstoffe bezeichnet man allgemein Füllstoffe mit niederem Schüttgewicht, meist von kleiner als 500 g/l. Die Leichtfüllstoffe sind vorzugsweise von den vorgenannten Füllstoffen verschieden. Besonders bevorzugt enthält der mineralische Montageschaum neben Leichtfüllstoffen keine weiteren Füllstoffe. Typische Leichtfüllstoffe sind, auf synthetischer oder natürlicher Basis, Stoffe wie Mikrohohlkugeln aus Glas, Polymere wie Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calciummetasilikat und/oder vulkanische Schlacke. Bevorzugte Leichtfüllstoffe sind Perlite, Celite, Cabosil, Circosil, Eurocell, Fillite, Promaxon, Vermex und/oder Wollastonite sowie Polystyrol. Die Leichtfüllstoffe liegen generell nicht in Form von Metallen, Legierungen oder Carbiden vor. Die Füllstoffe sind generell von latenten Luftporenbildnern verschieden.

Der mineralische Montageschaum basiert zu vorzugsweise 0 bis 10 Gew.-%, mehr bevorzugt 0,5 bis 5 Gew.-% und besonders bevorzugt 1 bis 3 Gew.-% auf Leichtfüllstoffen, bezogen auf das Trockengewicht des mineralischen Montageschaums. Am meisten bevorzugt enthält der mineralische Montageschaum keine Leichtfüllstoffe. Gegebenenfalls kann der mineralische Montageschaum noch Additive enthalten, beispielsweise Verflüssiger, Fließmittel, Verzögerer, Filmbildehilfsmittel, Dispergiermittel, Hydrophobierungsmittel, Pigmente, Weichmacher, Konservierungsmittel, Flammschutzmittel (z.B. Aluminiumhydroxid), disperse Kieselsäure. Bevorzugte Additive sind Fließmittel, Verflüssiger und insbesondere Hydrophobierungsmittel. Additive sind zu vorzugsweise 0 bis 20 Gew.-%, besonders bevorzugt 0,1 bis 10 Gew.-% und am meisten bevorzugt 0,5 bis 7 Gew.-% enthalten, bezogen auf das Trockengewicht des mineralischen Montageschaums. Beispiele für Hydrophobierungsmittel sind Fettsäuren oder deren Derivate, Wachse und Organosiliziumverbindungen, wie Silane oder Siloxane.

Beispiele für Organosiliziumverbindungen sind Silane der Formel (I) und/oder deren Mischungen und/oder deren Hydrolysate, insbesondere Oligomere oder Polymere der Hydrolysate,

(RO)₄₋ₙSiR'ₙ (I),

wobei n Werte von 1 bis 3 annimmt,
wobei jeweils R' gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und
R gleiche oder verschiedene Alkylreste und Alkoxyalkylenreste mit jeweils 1 bis 20 C-Atomen, insbesondere 1 bis 4 C-Atomen, oder Trimethylsilyl-Reste oder Wasserstoff, vorzugsweise Methyl und Ethyl, bedeutet.

Bevorzugt ist R' ein Alkylrest mit 1 bis 12 C-Atomen, besonders bevorzugt mit 1 oder 8 C-Atomen. Die Alkylreste können linear oder verzweigt sein. Bevorzugt ist R ein Wasserstoff, Alkylrest mit 1 bis 4 C-Atomen, wie Methyl-, Ethyl-, Propyl- oder ButylRest, insbesondere ein Ethyl-Rest.

Die Organosiliziumverbindungen können beispielsweise in reiner, fester oder vorzugsweise flüssiger Form eingebracht werden. Die Organosiliziumverbindungen können unverdünnt oder verdünnt, beispielsweise verdünnt mit Lösungsmitteln wie Alkoholen, insbesondere Ethanol, oder in Form von wässrigen Emulsionen zugegeben werden. Weiterhin können die Organosiliziumverbindungen in Form von Pulvern eingesetzt werden. Flüssige Organosiliziumverbindungen werden vorzugsweise in geträgerter Form, beispielsweise absorbiert auf einem Träger, wie Kieselsäure, oder als verkapseltes Pulver, beispielsweise mit Polyvinylalkoholen oder Alginaten verkapselt, eingesetzt.

Entsprechende Organosiliziumverbindungen sind kommerziell verfügbar.

Bevorzugte Fettsäuren oder Fettsäurederivate werden ausgewählt aus der Gruppe der gesättigten und ungesättigten Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

Besonders bevorzugte Fettsäuren sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Besonders bevorzugte Metallseifen sind die der bevorzugten C₈-bis C₂₂-Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Am meisten bevorzugt werden Metallseifen mit Lithium, Natrium, Kalium, Magnesium, Calcium, Aluminium, Zink, und den Ammoniumverbindungen.

Besonders bevorzugte Fettsäureamide sind die mit Mono- oder Diethanolamin und den obengenannten C₈- bis C₂₂-Fettsäuren erhältlichen Fettsäureamide.

Besonders bevorzugte Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester. Besonders bevorzugte Fettsäureester sind auch die Mono-, Di- und Polyglykolester der C₈- bis C₂₂-Fettsäuren. Weitere besonders bevorzugte Fettsäureester sind die Mono-und Diester von Polyglykolen und/oder Polyalkylenglykolen mit bis zu 20 Oxyalkylen-Einheiten, wie Polyethylenglykol und Polypropylenglykol. Besonders bevorzugt sind auch die Mono-, Di-und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren. Besonders bevorzugt sind auch die Fettsäureester von Sorbit und Mannit. Besonders bevorzugt sind die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Der mineralische Montageschaum enthält vorzugsweise 0,01 bis 5 Gew.-%, besonders bevorzugt 0,05 bis 2 Gew.-% und am meisten bevorzugt 0,1 bis 0,8 Gew.-% an Hydrophobierungsmittel, bezogen auf das Trockengewicht des mineralischen Montageschaums.

Vorzugsweise enthält der mineralische Montageschaum keine Hexafluorkieselsäure, insbesondere keine Salze der Hexafluorkieselsäure, wie Calcium-, Magnesium-, Zink- oder Ammonium-Salze.

Beim mineralischen Montageschaum handelt es sich vorzugsweise um ein 1K-System; das heißt, vorzugsweise werden sämtliche Bestandteile des mineralischen Montageschaums in einer Mischvorrichtung gemischt. Besonders bevorzugt wird zuerst mineralischer Montageschaum in Form einer Trockenmischung hergestellt, und anschließend wird Wasser zugegeben.

Die einzelnen Bestandteile des mineralischen Montageschaums können in gängigen Mischvorrichtungen gemischt werden, beispielsweise mit Mörtelmischaggregaten, Bohrmaschinenrührwerken, Dissolvern oder Rührern mit Mischwendel, vorzugsweise bei einer Umdrehungszahl des Rühr- oder Misch-Aggregates von > 100 UpM. Hierbei werden im Allgemeinen Luftporen in den mineralischen Montageschaum eingebracht, beispielsweise mittels Luftporenbildnern und gegebenenfalls durch Eintragen von Luft, wie weiter oben bereits beschrieben.

Auf Zugabe von Wasser wird der mineralische Montageschaum für vorzugsweise 1 bis 10 Minuten, besonders bevorzugt 2 bis 5 Minuten gemischt und angemacht. Das Mischen erfolgt vorzugsweise bei 5°C bis 35°C, besonders bevorzugt 15°C bis 25°C.

Zur Herstellung des wässrigen mineralischen Montageschaums werden vorzugsweise 4 bis 30 Gew.-%, besonders bevorzugt 6 bis 20 Gew.-% und am meisten bevorzugt 8 bis 15 Gew.-% Wasser eingesetzt, bezogen auf das Trockengewicht des mineralischen Montageschaums.

Das Applizieren des wässrigen mineralischen Montageschaums kann beispielsweise unmittelbar nach dem Anmachen mit Wasser erfolgen und erfolgt vorzugsweise spätestens 10 Minuten besonders bevorzugt spätestens 5 Minuten nach Anmachen mit Wasser.

Der mineralische Montageschaum enthält allgemein Luftporen. Der mineralische Montageschaum hat vorzugsweise eine Sahne-ähnliche oder cremige Konsistenz. Der mineralische Montageschaum hat eine Nassdichte von vorzugsweise 100 bis 1.000 kg/m³, besonders bevorzugt 200 bis 900 kg/m³ und am meisten bevorzugt 300 bis 800 kg/m³. Die Bestimmung der Dichte kann auf herkömmliche Weise erfolgen, beispielsweise durch Befüllen eines Behälters mit einem definierten Volumen des Schaums sowie Auswiegen.

Vorzugsweise wird der so erhaltene mineralische Montageschaum unmittelbar nach seiner Herstellung appliziert, insbesondere ohne einen weiteren Verarbeitungsschritt.

Der mineralische Montageschaum wird vorzugsweise zum Verfüllen von Hohlräumen beispielsweise beim Einbauen von Fenstern oder Türen verwendet, insbesondere zum Verfüllen von Hohlräumen zwischen Fenster- oder Türzargen und Fenster- oder Türlaibungen. Des Weiteren kann der mineralische Montageschaum auch zum Verfüllen von Hohlräumen beim Einbauen von Rollladenkästen oder zum Verfüllen von Schlitzen bei der Verlegung von Rohren oder Kabeln verwendet werden. Auch zum Verfüllen von Hohlräumen im Schalungsbau oder zwischen Betonfertigteilen oder sonstigen Zwischenräumen eignet sich der mineralische Montageschaum. Darüber hinaus können auch im Schiffsbau Hohlräume mit dem mineralischen Montageschaum verfüllt werden.

Das Applizieren des mineralischen Montageschaums kann vorteilhafterweise in an sich herkömmlicher Weise erfolgen, wie beispielweise vom Verfüllen von Hohlräumen mit Polyurethan-Schäumen (PU-Schäume) bekannt. So kann wässriger mineralischer Montageschaum maschinell, beispielsweise mit einem Sprühgerät, oder vorzugsweise manuell auf einen Untergrund aufgetragen werden, beispielsweise mit einer Spachtel oder vorzugsweise mittels einer mit wässrigem mineralischem Montageschaum befüllten Kartusche. Etwaige überstehende Reste an mineralischem Montageschaum können vor oder nach dessen Abbinden beispielsweise mittels eines Spachtels entfernt oder abgewaschen werden.

Der mineralische Montageschaum kann hierbei auf die gängigen Untergründe aufgebracht werden, beispielsweise auf mineralische Untergründe, wie Natursteine, Ziegelsteine, Fliesen, Betonsteine, Porenbeton, Beton, Estrich, Putz oder Bodenspachtelmassen, oder natürliche organische Untergründe, wie Holz, oder auf künstliche Untergründe, wie Polyvinylchlorid. Auch auf unterschiedlichste Dämmmaterialien kann der mineralische Montageschaum aufgebracht werden, beispielsweise auf Glasfasermaterialien, Polystyrol-, Polyurethan-, Mineralfaser- oder Mineralwolle-Platten.

Der abgebundene mineralische Montageschaum hat nach 28 Tagen im Normklima (23°C, 50% relative Luftfeuchtigkeit) eine Trockenrohdichte von vorzugsweise 10 bis 1000 kg/m³, besonders bevorzugt 100 bis 800 kg/m³ (Bestimmungsmethode: angelehnt an EN 1015-6).

Der mineralische Montageschaum (Festmörtel) hat nach 28 Tagen im Normklima (23°C, 50% relative Luftfeuchtigkeit) eine Wärmeleitfähigkeit von vorzugsweise 50 bis 200 mW/mK, besonders bevorzugt 30 bis 100 mW/mK. Die Bestimmung der Wärmeleitfähigkeit erfolgt mit dem Wärmeleitfähigkeitsmessgerät HFM 436 der Firma Netzsch nach DIN EN 13163. Die Messung wird mit der Einstellung "Lamda 10°C" durchgeführt, die untere Platte wird auf 2,5°C und die obere Platte auf 17,5°C eingestellt. Das Testsubstrat wird mittig eingeklemmt und die Messung läuft, bis das Testsubstrat eine Kerntemperatur von 10°C erreicht hat.

Überraschenderweise lässt sich erfindungsgemäßer mineralischer Montageschaum wie Polyurethanschaum zum Verfüllen von Hohlräumen beispielsweise beim Einbau von Fenstern oder Türen verwenden. Hierbei ist der mineralische Montageschaum sehr anwenderfreundlich. So lassen sich beispielsweise überstehende Reste durch einfaches Abkratzen, beispielsweise mit einer Spachtel, oder durch Abwaschen praktisch rückstandsfrei und ohne Vergilbung entfernen, im Unterschied zu Polyurethanschäumen. Solche Reste an mineralischem Montageschaum lassen sich mit dem Hausmüll entsorgen und sind kein Sondermüll im Gegensatz zu Polyurethanschaum. Mit mineralischem Montageschaum befüllte Kartuschen lassen sich nach ihrer Verwendung reinigen und vorteilhafterweise erneut verwenden, was den Bedarf an Kartuschen reduziert. Darüber hinaus ist der mineralische Montageschaum UVbeständig, neigt nicht zur Vergilbung und ist insbesondere brandbeständig.

Darüber hinaus zeigt der abgebundene mineralische Montageschaum vorteilhafte mechanische Eigenschaften, insbesondere eine hohe Druckfestigkeit oder Biegefestigkeit. Vorteilhaft ist auch die Trockenrohdichte des mineralischen Montageschaums niedrig.

Besonders überraschend war hierbei, dass sich der wässrige mineralische Montageschaum auch als einkomponentige Mischung (1K-System) mittels Kartuschen applizieren ließ und durch diese Applikation ein Schaum erhalten wurde, mit dem herkömmlicher Polyurethanschaum substituiert werden kann.

Die folgenden Beispiele dienen der detaillierten Erläuterung der Erfindung und sind in keiner Weise als Einschränkung zu verstehen.

### Herstellung eines mineralischen Montageschaums:

### Beispiel 1:

Zu einer Trockenmischung aus den in Tabelle 1 aufgeführten Komponenten wurde die in Tabelle 1 angegebene Menge an Wasser zugegeben und nach dreiminütigem Rühren mit einem Toni-Mischer (Stufe 2; 130 UpM) der gebrauchsfertige wässrige mineralische Montageschaum mit Sahne-artiger Konsistenz erhalten.

Der so erhaltene wässrige mineralische Montageschaum wurde in eine Kartusche gegeben und damit zum Verfüllen eines Hohlraums appliziert.

Zu den Komponenten des mineralischen Montageschaums:
- Polymerpulver:
   Polyvinylalkohol-stabilisiertes, in Wasser redispergierbares Polymerpulver eines Vinylacetat-Ethylen-Copolymers mit einer Glasübergangstemperatur von 16°C;
- Tylose MH 60010 P4 (Handelsname der Shin Etsu):
   veretherte Methylhydroxyethylcellulose (Verdickungsmittel);
- Hostapur OSB (Handelsname der Shin Etsu):
   Natriumsalz einer C14/C16-α-Olefinsulfonsäure;
- Milke CEM I 52,5R: Portlandzement;
- Fondu Lafarge (Handelsname der Imerys):
   Calciumoaluminatzement (schnellabbindender Zement);
- Walhalla Edelhydrat:
   Calciumhydroxid (Ca(OH)₂) (latent hydraulisches Bindemittel);
- Expandal 9-6355 (Handelsname der Benda-Lutz):
   metallisches Aluminium-Pulver.

**Tabelle 1: Rezeptur des mineralischen Montageschaums von Beispiel 1:**

| | Beispiel 1 [Gew.-T] |
|---|---|
| Polymerpulver | 100 |
| Tylose MH 60010 P4 | 12 |
| Hostapur OSB | 8 |
| Natriumhydrogencarbonat | 4 |
| Milke CEM I 52,5R | 694 |
| Fondu Lafarge | 60 |
| Walhalla Edelkalkhydrat | 50 |
| Gips (Anhydrit) | 40 |
| Expandal 9-6355 | 20 |
| Natriumcarbonat | 10 |
| Faser PAC hm 6,7/4 | 2 |
| | |
| Wasser | 95 |
| | |

**Austestung des mineralischen Montageschaums aus Beispiel 1:** Die Bestimmung der Nassdichte und Trockendichte des Montageschaums erfolgte mittels einem Dichtemessbecher.

Die Bestimmung der Biegefestigkeit und Druckfestigkeit sowie die Herstellung des Probekörpers erfolgte gemäß DIN 18555-3 und entsprechend den in Tabelle 2 angegebenen Lagerbedingungen.

Die Wärmeleitfähigkeit wurde bestimmt wie weiter oben in der allgemeinen Beschreibung angegeben.

Die Austestungsergebnisse sind in Tabelle 2 zusammengefasst.

**Tabelle 2: Austestungsergebnisse mit dem mineralischen Montageschaum des Beispiels 1:**

| | Beispiel 1 |
|---|---|
| Nassdichte [kg/m³] | 350 |
| Trockendichte [kg/m³] | 200 |
| Wärmeleitfähigkeit [mW/mK] | 47 |
| Druckfestigkeit 28dNK^{a)} [N/mm²] | 0, 50 |
| Biegefestigkeit 28dNK^{a)} [N/mm²] | 0,27 |

| | |
|---|---|
| a) 28dNK: Austestung nach 28 Tagen Normklimalagerung. | |

### Vergleichsbeispiel 2:

Es wurde eine Trockenmischung hergestellt und durch Mischen mit Wasser angemacht wie für Beispiel 1 beschrieben, mit den einzigen Unterschieden, dass 24 Gew.-Teile Natriumhydrogencarbonat aber kein Expandal 9-6355 eingesetzt wurde.

Das so erhaltene Produkt war auf Grund seiner Konsistenz nicht mit einer Kartusche applizierbar und damit nicht zum Verfüllen eines Hohlraums geeignet.

## Patentansprüche

1. Mineralischer Montageschaum basierend auf
einem oder mehreren Schaumstabilisatoren,
einem oder mehreren Luftporenbildnern ausgewählt aus der Gruppe umfassend Ammonium- oder Alkalisalze der Hydrogencarbonate oder Carbonate,
gegebenenfalls einem oder mehreren Füllstoffen und gegebenenfalls einem oder mehreren Additiven, **dadurch gekennzeichnet, dass** der mineralische Montageschaum zusätzlich auf einem oder mehreren Schutzkolloid stabilisierten Polymeren von ethylenisch ungesättigten Monomeren in Form von wässrigen Dispersionen oder in Wasser redispergierbaren Pulvern, einem oder mehreren latenten Luftporenbildnern ausgewählt aus der Gruppe umfassend Aluminium und Silicium sowie deren Legierungen und Calciumcarbide und
30 bis 95 Gew.-%, bezogen auf das Trockengewicht des mineralischen Montageschaums, Zement basiert,
mit der Maßgabe, dass der Anteil an latenten Luftporenbildnern ≥ 10 Gew.-% ist, bezogen auf das Gesamtgewicht aus Luftporenbildnern und latenten Luftporenbildnern.

2. Mineralischer Montageschaum gemäß Anspruch 1, **dadurch gekennzeichnet, dass** der mineralische Montageschaum zu 0,01 bis 10 Gew.-% auf latenten Luftporenbildnern basiert, bezogen auf das Trockengewicht des mineralischen Montageschaums.

3. Mineralischer Montageschaum gemäß Anspruch 1 oder 2, **dadurch gekennzeichnet, dass** der mineralische Montageschaum zu 0,01 bis 15 Gew.-% auf latenten Luftporenbildnern basiert, bezogen auf das Trockengewicht des im mineralischen Montageschaum enthaltenen Zement.

4. Mineralischer Montageschaum gemäß Anspruch 1 bis 3, **dadurch gekennzeichnet, dass** der mineralische Montageschaum zu 10 bis 95 Gew.-% auf latenten Luftporenbildnern basiert, bezogen auf das Gesamtgewicht aus den latenten Luftporenbildnern und den Luftporenbildnern.

5. Mineralischer Montageschaum gemäß Anspruch 1 bis 4, **dadurch gekennzeichnet, dass** der mineralische Montageschaum zu 10 bis 95 Gew.-% auf den latenten Luftporenbildnern und den Luftporenbildnern basiert, bezogen auf das Trockengewicht des im mineralischen Montageschaum enthaltenen Zement.

6. Mineralischer Montageschaum gemäß Anspruch 1 bis 5, **dadurch gekennzeichnet, dass** der mineralische Montageschaum zu 0,02 bis 15 Gew.-% auf den latenten Luftporenbildnern und den Luftporenbildnern basiert, bezogen auf das Trockengewicht des mineralischen Montageschaums.

7. Mineralischer Montageschaum gemäß Anspruch 1 bis 6, **dadurch gekennzeichnet, dass** der mineralische Montageschaum zu 0,1 bis 20 Gew.-% auf Gips basiert, bezogen auf das Trockengewicht des mineralischen Montageschaums.

8. Mineralischer Montageschaum gemäß Anspruch 1 bis 7, **dadurch gekennzeichnet, dass** der mineralische Montageschaum zu 0,5 bis 40 Gew.-% auf schnellabbindendem Zement basiert, bezogen auf das Trockengewicht des insgesamt enthaltenen Zements, wobei schnellabbindender Zement ausgewählt wird aus der Gruppe umfassend Aluminatzement, Calciumsulfoaluminatzementen und Hochtonerdezemenent.

9. Mineralischer Montageschaum gemäß Anspruch 1 bis 8, **dadurch gekennzeichnet, dass** als Schaumstabilisatoren ein oder mehrere Tenside ausgewählt werden aus der Gruppe umfassend Olefinsulfonsäuren; Fettsäuren oder deren Salze; Fettalkohole; Alkylphenole oder Hydroxyalkylphenole; Alkyl-und Alkylarylethersulfate; Alkylsulfonate, Alkylarylsulfonate; Ester oder Halbester der Sulfobernsteinsäure; Phosphorsäureteilester; Alkylpolyglykolether; Alkylarylpolyglykolether; Ethylenoxid/Propylenoxid (EO/PO)-Blockcopolymere; N-Methyltauride; Fettsäurealkylolamide; Aminoxide; oder
Phosphinoxide; Cocosfettsäure-Dimethylamino-Essigsaures Natrium; Sulfobetain und Phosphorsäureester; oder
ein oder mehrere Polymere ausgewählt werden aus der Gruppe umfassend Polyvinylalkohole; Polyvinylacetale; Polyvinylpyrrolidone; Polysaccharide in wasserlöslicher Form; Ligninsulfonate; Poly(meth)acrylsäure; Copolymerisate von (Meth)acrylaten mit carboxylfunktionellen Comonomereinheiten; Poly-(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere; und Vinylethermaleinsäure-Copolymere; oder
ein oder mehrere Proteine ausgewählt werden aus der Gruppe umfassend Kasein, Kaseinat, Sojaprotein; Gelatine; und sonstige Proteine erhältlich durch Proteinhydrolyse tierischer Proteine; oder
Enzyme biotechnologischen Ursprungs enthalten sind.

10. Mineralischer Montageschaum gemäß Anspruch 1 bis 9, **dadurch gekennzeichnet, dass** der mineralische Montageschaum zu 0,5 bis 40 Gew.-% auf Schutzkolloid stabilisierten Polymeren von ethylenisch ungesättigten Monomeren basiert, bezogen auf das Trockengewicht des mineralischen Montageschaums.

11. Mineralischer Montageschaum gemäß Anspruch 1 bis 10, **dadurch gekennzeichnet, dass** die Polymere von ethylenisch ungesättigten Monomeren basieren auf einem oder mehreren Monomeren ausgewählt aus der Gruppe umfassend Vinylester, (Meth)acrylsäureester, Vinylaromaten, Olefine, 1,3-Diene und Vinylhalogenide.

12. Mineralischer Montageschaum gemäß Anspruch 1 bis 11, **dadurch gekennzeichnet, dass** der mineralische Montageschaum keine Füllstoffe enthält.

13. Mineralischer Montageschaum gemäß Anspruch 1 bis 12, **dadurch gekennzeichnet, dass** der mineralische Montageschaum 0,01 bis 5 Gew.-%, bezogen auf das Trockengewicht des mineralischen Montageschaums, an einem oder mehreren Hydrophobierungsmitteln enthält ausgewählt aus der Gruppe umfassend Fettsäuren oder deren Derivate, Wachse und Organosiliziumverbindungen.

14. Verfahren zur Herstellung von mineralischem Montageschaum, indem eine Trockenmischung hergestellt wird
durch Mischen von einem oder mehreren Schaumstabilisatoren, einem oder mehreren Luftporenbildnern ausgewählt aus der Gruppe umfassend Ammonium- oder Alkalisalze der Hydrogencarbonate oder Carbonate, gegebenenfalls einem oder mehreren Füllstoffen und gegebenenfalls einem oder mehreren Additiven und
die so erhaltene Trockenmischung mit Wasser angemacht wird, **dadurch gekennzeichnet, dass** in die Trockenmischung zusätzlich ein oder mehrere Schutzkolloid stabilisierte Polymere von ethylenisch ungesättigten Monomeren in Form von in Wasser redispergierbaren Pulvern,
ein oder mehrere latente Luftporenbildner ausgewählt aus der Gruppe umfassend Aluminium und Silicium sowie deren Legierungen und Calciumcarbide und
30 bis 95 Gew.-%, bezogen auf das Trockengewicht des mineralischen Montageschaums, Zement eingebracht werden,
mit der Maßgabe, dass die Trockenmischung zu ≥ 10 Gew.-% auf latenten Luftporenbildnern, bezogen auf das Gesamtgewicht aus Luftporenbildnern und latenten Luftporenbildnern, basiert.

15. Verwendung des mineralischen Montageschaums aus Anspruch 1 bis 13 zum Verfüllen von Hohlräumen, insbesondere beim Einbauen von Fenstern oder Türen.

## Claims

1. Mineral expanding foam based on
one or more foam stabilizers,
one or more air pore formers selected from the group comprising ammonium salts or alkali metal salts of the hydrogencarbonates or carbonates,
optionally one or more fillers and optionally one or more additives, **characterized in that** the mineral expanding foam is additionally based on
one or more protective colloid-stabilized polymers of ethylenically unsaturated monomers in the form of aqueous dispersions or water-redispersible powders,
one or more latent air pore formers selected from the group comprising aluminium and silicon and alloys thereof and calcium carbides and
30% to 95% by weight, based on the dry weight of the mineral expanding foam, of cement,
with the proviso that the proportion of latent air pore formers is ≥ 10% by weight, based on the total weight of air pore formers and latent air pore formers.

2. Mineral expanding foam according to Claim 1, **characterized in that** the mineral expanding foam is based on latent air pore formers to an extent of 0.01% to 10% by weight, based on the dry weight of the mineral expanding foam.

3. Mineral expanding foam according to Claim 1 or 2, **characterized in that** the mineral expanding foam is based on latent air pore formers to an extent of 0.01% to 15% by weight, based on the dry weight of the cement present in the mineral expanding foam.

4. Mineral expanding foam according to Claim 1 to 3, **characterized in that** the mineral expanding foam is based on latent air pore formers to an extent of 10% to 95% by weight, based on the total weight of the latent air pore formers and the air pore formers.

5. Mineral expanding foam according to Claim 1 to 4, **characterized in that** the mineral expanding foam is based on the latent air pore formers and the air pore formers to an extent of 10% to 95% by weight, based on the dry weight of the cement present in the mineral expanding foam.

6. Mineral expanding foam according to Claim 1 to 5, **characterized in that** the mineral expanding foam is based on the latent air pore formers and the air pore formers to an extent of 0.02% to 15% by weight, based on the dry weight of the mineral expanding foam.

7. Mineral expanding foam according to Claim 1 to 6, **characterized in that** the mineral expanding foam is based on gypsum to an extent of 0.1% to 20% by weight, based on the dry weight of the mineral expanding foam.

8. Mineral expanding foam according to Claim 1 to 7, **characterized in that** the mineral expanding foam is based on quick-setting cement to an extent of 0.5% to 40% by weight, based on the dry weight of all the cement present, with quick-setting cement being selected from the group comprising aluminate cement, calcium sulfoaluminate cements and high-alumina cement.

9. Mineral expanding foam according to Claim 1 to 8, **characterized in that** present as foam stabilizers are one or more surfactants selected from the group comprising olefinsulfonic acids; fatty acids or salts thereof; fatty alcohols; alkylphenols or hydroxyalkylphenols; alkyl and alkylaryl ether sulfates; alkylsulfonates, alkylarylsulfonates; esters or monoesters of sulfosuccinic acid; partial phosphoric esters; alkyl polyglycol ethers; alkylaryl polyglycol ethers; ethylene oxide/propylene oxide (EO/PO) block copolymers; N-methyl taurides; fatty acid alkylolamides; amine oxides; or phosphine oxides; sodium cocoyl dimethylaminoacetate; sulfobetaine and phosphoric esters; or
one or more polymers selected from the group comprising polyvinyl alcohols; polyvinyl acetals; polyvinylpyrrolidones; polysaccharides in water-soluble form; lignosulfonates; poly(meth)acrylic acid; copolymers of (meth)acrylates with carboxy-functional comonomer units; poly(meth)acrylamide; polyvinylsulfonic acids and water-soluble copolymers thereof; melamine-formaldehydesulfonates; naphthalene-formaldehydesulfonates; styrene-maleic acid copolymers; and vinyl ether-maleic acid copolymers; or
one or more proteins selected from the group comprising casein, caseinate, soy protein; gelatin; and other proteins obtainable by protein hydrolysis of animal proteins; or
enzymes of biotechnological origin.

10. Mineral expanding foam according to Claim 1 to 9, **characterized in that** the mineral expanding foam is based on protective colloid-stabilized polymers of ethylenically unsaturated monomers to an extent of 0.5% to 40% by weight, based on the dry weight of the mineral expanding foam.

11. Mineral expanding foam according to Claim 1 to 10, **characterized in that** the polymers of ethylenically unsaturated monomers are based on one or more monomers selected from the group comprising vinyl esters, (meth)acrylic esters, vinylaromatics, olefins, 1,3-dienes and vinyl halides.

12. Mineral expanding foam according to Claim 1 to 11, **characterized in that** the mineral expanding foam does not contain any fillers.

13. Mineral expanding foam according to Claim 1 to 12, **characterized in that** the mineral expanding foam contains 0.01% to 5% by weight, based on the dry weight of the mineral expanding foam, of one or more hydrophobizing agents selected from the group comprising fatty acids and derivatives thereof, waxes and organosilicon compounds.

14. Process for producing mineral expanding foam,
in that a dry mixture is produced
by mixing one or more foam stabilizers, one or more air pore formers selected from the group comprising ammonium salts or alkali metal salts of the hydrogencarbonates or carbonates, optionally one or more fillers and optionally one or more additives and
the thus obtained dry mixture is made up with water, **characterized in that** one or more protective colloid-stabilized polymers of ethylenically unsaturated monomers in the form of water-redispersible powders,
one or more latent air pore formers selected from the group comprising aluminium and silicon and alloys thereof and calcium carbides and
30% to 95% by weight, based on the dry weight of the mineral expanding foam, of cement are additionally introduced into the dry mixture,
with the proviso that the dry mixture is based on latent air pore formers to an extent of ≥ 10% by weight, based on the total weight of air pore formers and latent air pore formers.

15. Use of the mineral expanding foam from Claim 1 to 13 for filling cavities, in particular when installing windows or doors.

## Revendications

1. Mousse expansible à base de minéraux composée de un ou plusieurs stabilisateurs de mousse,
un ou plusieurs entraîneurs d'air choisis dans le groupe comprenant les sels d'ammonium ou alcalins des hydrogénocarbonates ou carbonates,
éventuellement une ou plusieurs charges et éventuellement un ou plusieurs additifs, **caractérisée en ce que** la mousse expansible à base de minéraux est en outre composée de
un ou plusieurs polymères stabilisés par un colloïde protecteur de monomères éthyléniquement insaturés sous forme de dispersions aqueuses ou de poudres redispersables dans l'eau,
un ou plusieurs entraîneurs d'air latents choisis dans le groupe comprenant l'aluminium et le silicium et leurs alliages, ainsi que des carbures de calcium et
par rapport au poids sec de la mousse expansible à base de minéraux, de 30 à 95 % en poids de ciment,
à condition que la proportion d'entraîneurs d'air latents soit ≥ 10 % en poids, par rapport au poids total des entraîneurs d'air et des entraîneurs d'air latents.

2. Mousse expansible à base de minéraux selon la revendication 1, **caractérisée en ce que** la mousse expansible à base de minéraux est composée de 0,01 à 10 % en poids d'entraîneurs d'air latents, par rapport au poids sec de la mousse expansible à base de minéraux.

3. Mousse expansible à base de minéraux selon la revendication 1 ou 2, **caractérisée en ce que** la mousse expansible à base de minéraux est composée de 0,01 à 15 % en poids d'entraîneurs d'air latents, par rapport au poids sec du ciment contenu dans la mousse expansible à base de minéraux.

4. Mousse expansible à base de minéraux selon les revendications 1 à 3, **caractérisée en ce que** la mousse expansible à base de minéraux est composée de 10 à 95 % en poids d'entraîneurs d'air latents, par rapport au poids total des entraîneurs d'air latents et des entraîneurs d'air.

5. Mousse expansible à base de minéraux selon les revendications 1 à 4, **caractérisée en ce que** la mousse expansible à base de minéraux est composée de 10 à 95 % en poids des entraîneurs d'air latents et des entraîneurs d'air, par rapport au poids sec du ciment contenu dans la mousse expansible à base de minéraux.

6. Mousse expansible à base de minéraux selon les revendications 1 à 5, **caractérisée en ce que** la mousse expansible à base de minéraux est composée de 0,02 à 15 % en poids des entraîneurs d'air latents et des entraîneurs d'air, par rapport au poids sec de la mousse expansible à base de minéraux.

7. Mousse expansible à base de minéraux selon les revendications 1 à 6, **caractérisée en ce que** la mousse expansible à base de minéraux est composée de 0,1 à 20 % de plâtre, par rapport au poids sec de la mousse expansible à base de minéraux.

8. Mousse expansible à base de minéraux selon les revendications 1 à 7, **caractérisée en ce que** la mousse expansible à base de minéraux est composée de 0,5 à 40 % en poids de ciment à prise rapide, par rapport au poids sec du ciment total contenu,
le ciment à prise rapide étant choisi dans le groupe comprenant le ciment d'aluminate, les ciments de sulfoaluminate de calcium et le ciment à haute teneur en aluminate de calcium.

9. Mousse expansible à base de minéraux selon les revendications 1 à 8, **caractérisée en ce qu'**elle contient comme stabilisateurs de mousse
un ou plusieurs tensioactifs choisis dans le groupe comprenant les acides oléfinesulfoniques ; les acides gras ou leurs sels ; les alcools gras ; les alkylphénols ou les hydroxyalkylphénols ; les alkyléthersulfates et les alkylaryléthersulfates ; les alkylsulfonates, les alkylarylsulfonates ; les esters ou les hémiesters de l'acide sulfosuccinique ; les esters partiels de l'acide phosphorique ; les éthers alkylpolyglycoliques ; les éthers alkylarylpolyglycoliques ; les copolymères séquencés d'oxyde d'éthylène et d'oxyde de propylène (OE/OP); les N-méthyltaurates ; les alkylolamides d'acides gras ; les oxydes d'amine ; ou les oxydes de phosphine ; l'acide gras de noix de coco-diméthylamino-acétate de sodium ; la sulfobétaïne et les esters de l'acide phosphorique ; ou
un ou plusieurs polymères choisis dans le groupe comprenant les alcools polyvinyliques ; les acétals polyvinyliques ; les polyvinylpyrrolidones ; les polysaccharides sous forme hydrosoluble ; les lignosulfonates ; l'acide poly(méth)acrylique ; les copolymères de (méth)acrylates avec des motifs comonomères à fonction carboxyle ; le poly(méth)acrylamide ; les acides polyvinylsulfoniques et les copolymères hydrosolubles de ceux-ci ; les sulfonates de mélamine-formaldéhyde ; les naphtalène sulfonates-formaldéhyde ; les copolymères de styrène et d'acide maléique ; et les copolymères d'éther vinylique et d'acide maléique ; ou
une ou plusieurs protéines choisies dans le groupe comprenant la caséine, le caséinate, la protéine de soja, la gélatine et d'autres protéines pouvant être obtenues par hydrolyse des protéines animales ; ou
des enzymes issues des biotechnologies.

10. Mousse expansible à base de minéraux selon les revendications 1 à 9, **caractérisée en ce que** la mousse expansible à base de minéraux est composée de 0,5 à 40 % en poids de polymères stabilisés par un colloïde protecteur de monomères éthyléniquement insaturés, par rapport au poids sec de la mousse expansible à base de minéraux.

11. Mousse expansible à base de minéraux selon les revendications 1 à 10, **caractérisée en ce que** les polymères de monomères éthyléniquement insaturés sont composés d'un ou plusieurs monomères choisis dans le groupe comprenant les esters vinyliques, les esters de l'acide (méth)acrylique, les composés vinylaromatiques, les oléfines, les 1,3-diènes et les halogénures de vinyle.

12. Mousse expansible à base de minéraux selon les revendications 1 à 11, **caractérisée en ce que** la mousse expansible à base de minéraux ne contient pas de charges.

13. Mousse expansible à base de minéraux selon les revendications 1 à 12, **caractérisée en ce que** la mousse expansible à base de minéraux contient de 0,01 à 5 % en poids, par rapport au poids sec de la mousse expansible à base de minéraux, d'un ou plusieurs agents hydrophobes choisis dans le groupe comprenant les acides gras ou les dérivés de ceux-ci, les cires et les composés organosiliciés.

14. Procédé de préparation de mousse expansible à base de minéraux,
en produisant un mélange sec
par mélange d'un ou plusieurs stabilisateurs de mousse, d'un ou plusieurs entraîneurs d'air choisis dans le groupe comprenant les sels d'ammonium ou alcalins d'hydrogénocarbonates ou de carbonates, éventuellement d'une ou plusieurs charges et éventuellement d'un ou plusieurs additifs et
par ajout d'eau au mélange sec ainsi obtenu, **caractérisé en ce que** l'on ajoute dans le mélange sec un ou plusieurs polymères stabilisés par un colloïde protecteur de monomères éthyléniquement insaturés sous forme de poudres redispersables dans l'eau,
un ou plusieurs entraîneurs d'air latents choisis dans le groupe comprenant l'aluminium et le silicium et les alliages de ceux-ci, ainsi que les carbures de calcium et
par rapport au poids sec de la mousse expansible à base de minéraux, de 30 à 95 % en poids de ciment,
à condition que le mélange sec soit composé, dans une proportion de ≥ 10 % en poids, d'entraîneurs d'air latents, par rapport au poids total des entraîneurs d'air et des entraîneurs d'air latents.

15. Utilisation de la mousse expansible à base de minéraux selon les revendications 1 à 13 pour le comblement de cavités, en particulier lors de l'installation de fenêtres ou de portes.
